# EUROPÄISCHE PATENTANMELDUNG

(11) **EP 2 023 231 A2**
(43) Veröffentlichungstag der Anmeldung: **11.02.2009**
(21) Anmeldenummer: 08162147.6
(22) Anmeldetag: 11.08.2008
(51) Int. Cl.: G06F 1/26

(54) **Speicher-Element mit Stromspeicher und USB-Stecker**

(30) Priorität: 10.08.2007 DE 102007037890
(71) Anmelder: Schätz, Bernd, 81379 München (DE)
(72) Erfinder: Schätz, Bernd, 81379 München (DE)
(74) Vertreter: Alber, Norbert

(57) **Zusammenfassung**

In einem einzigen Speicherstick wird sowohl ein Stromspeicher als auch ein Datenspeicher funktionsvereinigt.

## Beschreibung

### I. Anwendungsgebiet

Die Erfindung betrifft ein Speichergerät.

### II. Technischer Hintergrund

So genannte Datensticks sind als externe Datenspeicher für elektronische Geräte allgemein bekannt und können über einen am Datenstick fest angebauten USB-Stecker oder Mini-USB-Stecker an ein entsprechendes elektronisches Gerät angeschlossen werden. Dabei verfügen PCs in der Regel über eine USB-Buchse, Handys, PDAs oder digitale Photoapparate in aller Regel über eine Mini-USB-Buchse.

Auf den in solchen Speichersticks eingebauten Festspeicher können von dem entsprechenden elektronischen Gerät Daten in den Speicherstick ausgelagert werden, wofür das Betriebsprogramm des angedockten elektronischen Gerätes benutzt wird.

Darüber hinaus sind Notstromversorgungen verschiedenster Art für mobile elektronische Geräte wie Handys oder Notebooks bekannt.

Diese bestehen - sofern sie nicht auf einen Anschluss an das Stromnetz angewiesen sind - in der Regel aus einem Stromspeicher in Form von Akkus oder in den Stromspeicher einsetzbaren handelsüblichen Batterien, und können wiederum über einen am Stromspeicher angeordneten USB-Stecker oder Mini-USB-Stecker an das elektronische Gerät angeschlossen werden und laden dessen Akku nach.

Für den flexibleren Einsatz und eine hohe Stromkapazität sind diese Geräte in der Regel relativ groß, beispielsweise ebenso groß wie ein Handy, und werden mit dem elektronischen Gerät meist über ein Kabel verbunden, was das Transportvolumen und die Handhabung umständlich gestaltet.

Das große Volumen wird unter anderem durch die Verwendung von entnehmbaren Akkus oder Batterien bedingt, die in der Regel nur über eine Spannung von 1,5 V verfügen, so dass zum Aufbringen der von elektronischen Geräten meist benötigen Spannung von 5 V oder 6 V in der Regel vier einzelne Batterien in den Speicher eingesetzt werden müssen, was allein schon wegen der mechanischen Aufnahme und Halterung ein relativ großes Gehäuse ergibt.

Derartige Notstromspeicher entleeren den Inhalt ihres Stromspeichers automatisch in den Akku des elektronischen Gerätes, sobald sie an dieses angeschlossen werden.

### III. Darstellung der Erfindung

### a) Technische Aufgabe

Es ist daher die Aufgabe gemäß der Erfindung, ein Speichergerät zu schaffen, welches als externer Speicher sowohl für Strom als auch für Daten dient und an unterschiedliche elektronische Geräte anschließbar ist und vorzugsweise über eine Funktionswahl verfügt.

### b) Lösung der Aufgabe

Diese Aufgabe wird durch die Merkmale des Anspruches 1 gelöst. Vorteilhafte Ausführungsformen ergeben sich aus den Unteransprüchen.

Dadurch, dass Stromspeicher und Datenspeicher mit den damit zu versorgenden elektronischen Geräten kompatibel sind, jedoch in einem Gerät vorhanden sind, hat der Nutzer wahlweise sowohl einen Datenspeicher zum Auslagern von Daten als auch eine Notstromversorgung für sein elektronisches Gerät zur Verfügung.

Wenn zusätzlich eine Steuerung vorhanden ist, die die Funktionen des Speichergerätes steuern kann, wie etwa das Ein- oder Auslagern von Dateien, das Abspielen von Musikdateien oder ähnliches, kann der vorhandene Stromspeicher dazu benutzt werden, um das Speichergerät autark zu betreiben, also beispielsweise als MP3-Player Musik unmittelbar über einen Kopfhörer wiederzugeben, oder die Weitergabe von Dateien an ein anderes elektronisches Gerät selbst zu veranlassen, ohne das hierfür wie bei einem Speicherstick ohne Steuerung das Betriebssystem eines angeschlossenen elektronischen Gerätes wie etwa eines Handys oder eines Notebooks benötigt wird.

Dadurch können beispielsweise ohne Zwischenschaltung eines Computers Bilddaten von einer digitalen Kamera direkt an den Speicherstick übergeben werden oder auch Dateien jedweder Art von einem Speicherstick an einen anderen Speicherstick weitergegeben werden, weshalb das Speichergerät außer den Steckern im USB- und/oder Mini-USB-Format vorzugsweise auch eine Buchse zumindest im USB-Format aufweisen sollte, um einen anderen Speicherstick an dieses Speichergerät anzuschließen und dorthin Dateien weiterzugeben.

Um den Einsatz des Speichergerätes gegenüber verschiedenen elektronischen Geräten zu ermöglichen, weist das Speichergerät vorzugsweise sowohl einen USB-Stecker als auch einen Mini-USB-Stecker auf oder - sofern nur einer von beiden vorhanden ist - einen Adapter zum adaptieren der anderen Steckerform.

Ein solcher Adapter ist vorzugsweise unverlierbar an dem Speichergerät angeordnet.

Um zwischen den unterschiedlichen Funktionen eines solchen kombinierten Speichergerätes zu wählen, also zwischen Stromtransfer einerseits und Datentransfer andererseits, hierbei wieder unterschieden z. B. zwischen Aufnahme und Abgabe von Strom bzw. Daten, ist vorzugsweise ein Eingabeelement, beispielsweise ein Wählschalter, an dem Speichergerät vorhanden.

Je umfangreicher die möglichen Betriebsmodi sind, um so sinnvoller ist auch die Anordnung eines Anzeigeelementes, in einfacher Form durch einzelne Leuchtdioden, oder auch in Form eines Displays, welches unter anderem den gewählten Betriebsmodus zeigt, darüber hinaus aber auch z. B. beim Übertragen von Daten die Auswahl bestimmter Dateien oder Dateiordner für die Übertragung ermöglicht, was die entsprechende Steuerung unterstützen soll.

Der Stromspeicher des Speichergerätes besteht vorzugsweise aus einem fest eingebauten Speicher, um Bauvolumen für ein umgebendes Gehäuse, in welches handelsübliche Batterien oder Akkus eingesetzt werden, ebenso zu minimieren wie Kontaktschwierigkeiten auszuschließen.

Alternativ kann das Speichergerät jedoch - entweder zusätzlich oder ausschließlich - einen Aufnahmeschacht für eine handelsübliche Batterie enthalten. Dabei sollte es sich dann um eine Batterie mit einer Spannung von 5 V oder 6 V handeln, wie sie beispielsweise in digitalen Fotoapparaten Verwendung findet, so dass nur eine einzige Batterieaufnahme genügt, um die für elektronische Geräte notwendige Versorgungsspannung zur Verfügung zu stellen.

Eine andere Möglichkeit für den Stromspeicher besteht darin, den Stromspeicher nicht als Batterie oder Akku auszuführen, sondern hierfür einen Kondensator zu verwenden. Die Kapazitäten handelsüblicher Kondensatoren steigen immer weiter an und insbesondere die so genannten Goldkondensatoren können inzwischen Strommengen speichern, die mit kleinen Batterien konkurrenzfähig sind.

Der Vorteil von Kondensatoren als Stromspeicher besteht zum einen darin, dass ein Kondensator beliebig oft wieder aufgeladen werden kann, ohne an Ladekapazität zu verlieren, was derzeit keine verfügbare Batterietechnologie bietet.

Ein weiterer Vorteil eines Kondensators besteht darin, dass seine Aufladung sehr schnell vor sich geht, also im vorliegenden Fall die Ladezeit weniger als 10 Sekunden betragen wird. Auf diese Art und Weise ist kein über Stunden aufrecht zu erhaltender Anschluss z. B. an die USB-Buchse eines Notebooks erforderlich, sondern es genügt ein kurzes Anstecken, was sich auf Reisen überall durchführen lässt, sei es am PC einer Hotelrezeption oder am Notebook des Sitznachbarn im Zug oder Flugzeug.

Vorzugsweise kann ein solcher Kondensator als fest eingebauter Stromspeicher kombiniert werden mit dem zuvor beschriebenen Aufnahmeschacht für eine einzige, mindestens 5 V zur Verfügung stellende, kleine Batterie bzw. Akku.

Ein weiteres Problem eines solchen Speichergerätes besteht in der notwendigen Nachladung des Stromspeichers, falls der Stromspeicher entleert ist, z. B. durch Aufladen eines daran angeschlossenen mobilen elektronischen Gerätes.

Die Nachladung des eigenen Stromspeichers des Speichergerätes kann durch Anstecken mittels des USB-Steckers an einem PC oder an einem Notebook erfolgen, wofür das passende elektronische Gerät mit dem passenden Steckanschluss zur Verfügung stehen muss.

Eine andere Möglichkeit besteht darin, den Stromspeicher des elektronischen Gerätes induktiv, und damit berührungslos, aufzuladen durch spezifische Annäherung oder Anordnung gegenüber einer vorhandenen Stromquelle oder einem vorhandenen stromführenden Kabel.

Insbesondere ist dies möglich, indem eine Wicklung des Speichergerätes um eine solche externe Stromleitung herumgeführt wird und dadurch der durch die Leitung fließende Strom mittels Induktion den Stromspeicher des Speichergerätes lädt. Auf diese Art und Weise ist kein spezifisches elektronisches Gerät notwendig und auch keine spezifische Anschlussbuchse.

Um eine solche Wicklung um ein vorhandenes Stromkabel herumzuführen, kann die Wicklung in einer am Speichergerät vorhandenen anfänglich geschlossener Öse liegen, die wie ein Karabiner zu öffnen ist, um das stromführende Kabel ins Innere der Öse zu bringen. Die Öffnungs- und Kontaktstellen des Karabiners müssen dann selbstverständlich für die einzelnen elektrischen Windungen der Wicklung getrennt Strom führend und kontaktierend ausgeführt sein.

Ein solcher Karabiner kann zusätzlich unmittelbar als Befestigungselement des Speichergerätes an einem Bauteil der Umgebung, beispielsweise einer Gürtelschlaufe oder an einem Schlüsselbund, dienen.

Des Weiteren kann das Speichergerät auch eine vorzugsweise weiße Leuchtdiode als Lichtquelle umfassen, um als Taschenlampe eingesetzt zu werden. Das Eingabeelement bzw. der Wählschalter muss dann eine entsprechende Stellung ermöglichen.

### c) Ausführungsbeispiele

Ausführungsformen gemäß der Erfindung sind im Folgenden beispielhaft näher beschrieben. Es zeigen:
- Fig. 1:: eine erste Bauform des Speichergerätes in Frontansicht und Rückansicht, und
- Fig. 2:: eine zweite Bauform des Speichergerätes.

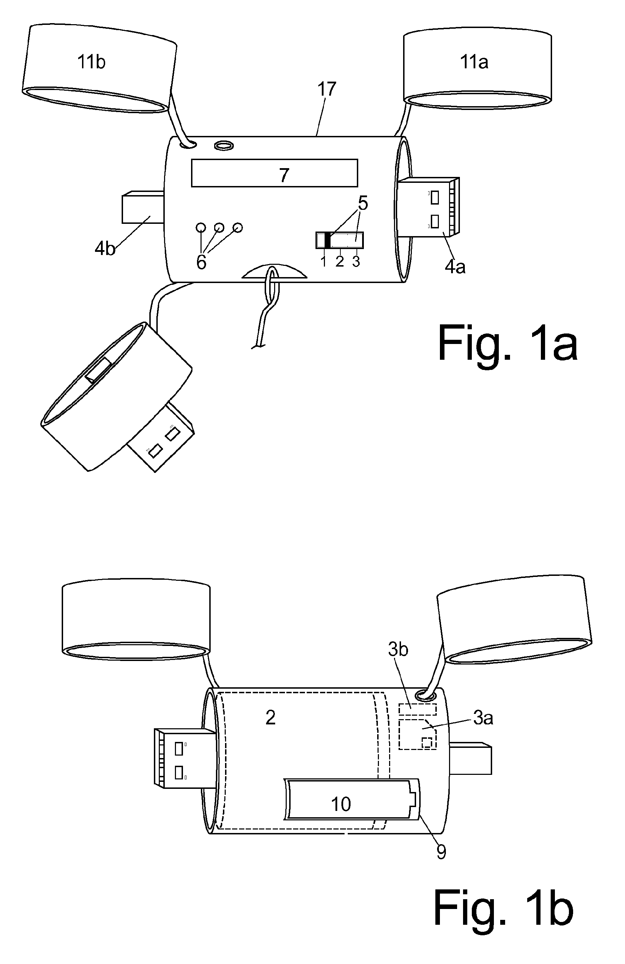

In Fig. 1a ist die Frontansicht des Speichergerätes, welches hier als Speicherstick 1 ausgebildet ist, dargestellt:

Von dem etwa zylindrischen Grundkörper 17, jedoch vorzugsweise mit elliptischem, gegebenenfalls auch rechteckigem, Querschnitt stehen an den beiden Stirnseiten auf der einen Seite ein USB-Stecker 4a und auf der anderen Stirnfläche ein Mini-USB-Stecker 4b vor zum Anstecken des Speichersticks 1 an einem mobilen elektronischen Gerät. Sofern nur ein USB-Stecker vorhanden ist, ist ein Adapter 8 zum adaptieren der anderen USB-Steckerform ebenfalls unverlierbar vorhanden.

Entsprechende Abdeck-Kappen 11a, b zum Abdecken dieser USB-Stecker 4a, b sind unverlierbar über eine biegsame Lasche an den Rändern der beiden Endbereiche des Grundkörpers angeordnet.

In der Seitenfläche des Grundkörpers ist einerseits ein Display 7 untergebracht, in dem sowohl der gewählte Betriebsmodus, als auch abrufbar der Füllzustand des Datenspeichers als auch des Stromspeichers angezeigt werden können. Ein Wählschalter 5 ermöglicht die Auswahl des Betriebsmodus. Leuchtdioden 6 können zusätzlich bestimmte Betriebszustände signalisieren.

Weiterhin enthält der Speicherstick an seinem Umfang eine oder auch mehrere Klinkenbuchse 12, vorzugsweise zum Anstecken eines Netzladegerätes und/oder eines Kopfhörers.

Fig. 1b zeigt die Rückseite des Gerätes, wobei ersichtlich wird, dass der Großteil des Innenraumes des Grundkörpers 17 von dem fest eingebauten Stromspeicher 2 benötigt wird.

Als Alternative oder zusätzlich dazu weist der Grundkörper 17 einen Batterieschacht 9 auf, indem eine insbesondere einzige Batterie oder ein Akku 10 einsetzbar ist, die alleine bereits die notwendige Betriebsspannung für ein elektronisches Gerät von 5 V oder 6 V bieten. Solche kleinen, zylindrischen Batterien sind insbesondere für Fotoapparate verfügbar.

In Fig. 1b ist der erste Datenspeicher 3a als herausnehmbare Speicherkarte 18 insbesondere im Mikro-SD-Format, ausgebildet, wobei zusätzlich ein fester, eingebauter Datenspeicher 3b vorhanden sein kann, indem insbesondere der Programmablauf der Steuerung abgelegt sein kann, welche die einzelnen Betriebsarten steuert, insbesondere das Aufnehmen bzw. das Abgeben von Daten ohne Anschluss eines externen Betriebssystems ermöglicht.

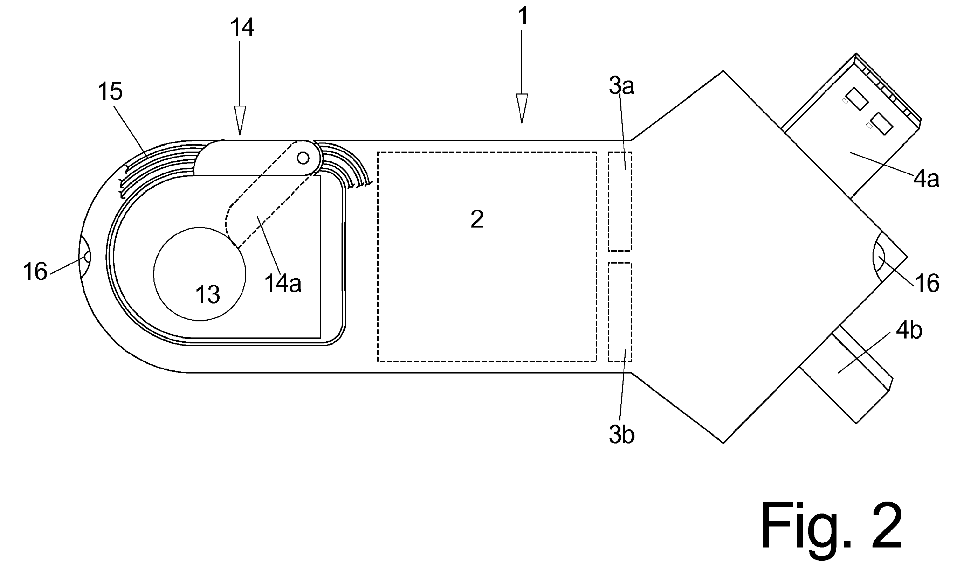

Fig. 2 zeigt eine andere Bauform, bei der das Speichergerät wiederum in Form eines stiftförmigen, also länglichen, Speichersticks 1 ausgebildet ist, in diesem Fall jedoch beide USB-Stecker, also normalen USB-Stecker 4a und Mini-USB-Stecker 4b, am selben Ende trägt, indem die beiden auf Stirnflächen vorstehen, die im Winkel zueinander stehen, so dass die beiden Stecker schräg voneinander wegragen und ohne gegenseitige Behinderung in ein elektronisches Gerät eingesteckt werden können.

Das andere Ende des Speichersticks 1 ist als Karabiner 14 ausgebildet, der eine übliche Öffnungsklinke 14a aufweist, wodurch Gegenstände ins Innere des Karabiners verbracht werden können, beispielsweise das hier dargestellte stromführende Kabel 13.

Da durch den Karabiner 14, also bei geschlossener Öffnungsklinke 14a durchgängig, um die Öffnung des Karabiners 14 herum eine elektrische Wicklung 15 angeordnet ist - wofür die Öffnungsklinke 14 an ihrem vorderen und hinteren Ende elektrische Kontaktstellen für jede Ader der Wicklung 15 sowie in ihrem Inneren entsprechende Andern aufweist - die zur induktiven Stromaufnahme von dem stromführenden Kabel 13 geeignet ist und mit dem Stromspeicher 2 zum Zwecke der Nachladung in Verbindung steht, kann der Stromspeicher 2 nachgeladen werden, indem ein stromführendes Kabel 13 ins Innere des Karabiners verbracht und die Karabinerklinke 14a wieder geschlossen wird. Sofern es sich bei dem Stromspeicher 2 um einen Kondensator handelt, ist dieses nachladen unter Umständen in wenigen Sekunden abgeschlossen.

Innerhalb des Grundkörpers 17 ist neben dem Stromspeicher 2 noch ein erster und zweiter Datenspeicher 3a, b fest angeordnet, der zum einen der Datenspeicherung und zum anderen zur Aufnahme des Programms der Ablaufsteuerung dienen kann.

Des Weiteren weist der Speicherstick 1 der Fig. 2 an wenigstens einem stirnseitigen Ende eine Leuchtdiode, insbesondere eine weiße Leuchtdiode 16 zur Benutzung als Lampe auf:
Wie am rechten Ende in Fig. 1 eingezeichnet, kann sich die Leuchtdiode 16 in der Mitte der rechten Stirnseite zwischen den beiden USB-Steckern 4a, b befinden, oder stattdessen am linken Ende im Karabiner 14.

Vorzugsweise kann die Öffnungsklinke 14a des Karabiners 14 auch als Wählschalter für die einzelnen Funktionen des Speichergerätes dienen und/oder als Einschalter für die Leuchtdiode 16 und damit die Lampenfunktion.

### BEZUGSZEICHENLISTE

- 1: Speicherstick
- 2: Stromspeicher
- 3a,b: Datenspeicher
- 4a: USB-Stecker
- 4b: Mini-USB-Secker
- 5: Wählschalter
- 6a: Leuchtdioden
- 7: Display
- 8: Adapter
- 9: Batterieschacht
- 10: Batterie
- 11 a,b: Kappe
- 12: Klinkenbuchse
- 13: Kabel
- 14: Karabiner
- 14a: Öffnungsklinke
- 15: Wicklung
- 16: Leuchtdiode
- 17: Grundkörper
- 18: Speicherkarte

## Patentansprüche

1. Speichergerät mit
- einem Stromspeicher (2),
- wenigstens einem Datenspeicher (3a..),
- wenigstens einem Anschlusselement,
**dadurch gekennzeichnet, dass**
- der Stromspeicher (2) ausgelegt ist zum Nachladen von Handys und anderen mobilen elektronischen Geräten,
- das Anschlusselement wenigstens einen USB-Stecker (4a) oder einen Mini-USB-Stecker (4b) umfasst, und
- der Datenspeicher (3a) kompatibel zu PCs, Handys und anderen elektronischen Geräte ist.

2. Speichergerät nach Anspruch 1,
**dadurch gekennzeichnet, dass**
- der Stromspeicher ein fest eingebauter Speicher ist, und/oder
- der Datenspeicher eine entnehmbare Speicherkarte (18) ist.

3. Speichergerät nach einem der vorhergehenden Ansprüche,
**dadurch gekennzeichnet, dass**
- das Speichergerät ein Eingabeelement, insbesondere einen Wählschalter (5) umfasst, mit dem wenigstens zwischen Stromtransfer und Datentransfer unterschieden werden kann, und insbesondere
- im Falle des Stromtransfers eine weitere Unterscheidung zwischen Stromaufnahme und Stromabgabe des Stromspeichers (2) des Speichergerätes möglich ist.

4. Speichergerät nach einem der vorhergehenden Ansprüche,
**dadurch gekennzeichnet, dass**
- das Anschlusselement ohne Kabel direkt am Speichergerät angeordnet ist, insbesondere in Form eines aus dem Speichergerätes vorstehenden Steckers, und/oder
- das Speichergerät ein Anzeigelement, insbesondere Leuchtdioden (6) und/oder ein Display (7) zur Anzeige des gewählten Modus umfasst.

5. Speichergerät nach einem der vorhergehenden Ansprüche,
**dadurch gekennzeichnet, dass**
- als Stromspeicher (2) ein Kondensator mit großer Kapazität, insbesondere ein Goldkondensator, vorhanden ist, und/oder
- das Speichergerät einen Adapter (8) umfasst, um von dem vorhandenen Stecker, z. B. einem Mini-USB-Stecker, am Speichergerät auf eine andere Steckerform, z. B. USB-Stecker oder einen gerätespezifischen Stecker, zu adaptieren.

6. Speichergerät nach einem der vorhergehenden Ansprüche,
**dadurch gekennzeichnet, dass**
- das Speichergerät wenigstens eine USB-Buchse (4a, b) aufweist, , und insbesondere
- das Speichergerät sowohl einen USB-Stecker (4a) als auch einen Mini-USB-Stecker (4b) umfasst.

7. Speichergerät nach einem der vorhergehenden Ansprüche,
**dadurch gekennzeichnet, dass**
- das Speichergerät eine Buchse (12) für Klinkenstecker zum Anschluss eines externen Netzladegerätes umfasst, und/oder
- das Speichergerät eine Klinkenbuchse (12) zum Anschließen eines Kopfhörers umfasst.

8. Speichergerät nach einem der vorhergehenden Ansprüche,
**dadurch gekennzeichnet, dass**
- das Speichergerät eine induktive Lademöglichkeit zum Aufladen des Stromspeichers (2) an einem beliebigen elektrischen Kabel (13) umfasst, insbesondere das USB-Speichergerät nach Art eines Karabiners (14) aufklappbar und um ein elektrisches Kabel (13) herum schließbar ist zur Erzeugung einer elektrischen Wicklung (15) um das Stromkabel (13) herum, und insbesondere
- der Karabiner (14) gleichzeitig als Befestigungselement für das Speichergerät ausgelegt ist.

9. Speichergerät nach einem der vorhergehenden Ansprüche,
**dadurch gekennzeichnet, dass**
das Speichergerät eine Steuerung aufweist, mittels der die gewählte Funktion des Speichergerätes durchgeführt wird, und insbesondere auch das Einlesen bzw. Auslesen der Daten gesteuert wird, unabhängig vom Vorhandensein des Betriebssystems eines anderen elektronischen Gerätes.

10. Speichergerät nach einem der vorhergehenden Ansprüche,
**dadurch gekennzeichnet, dass**
- die Steuerung in einem separaten Bereich des ersten Datenspeichers (3a) angeordnet ist oder an einem zweiten Speicher (3b), und insbesondere
- die Steuerung ein Musikabspielprogramm mit umfasst.

11. Speichergerät nach einem der vorhergehenden Ansprüche,
**dadurch gekennzeichnet, dass**
der Adapter (8) zum Adaptieren einer Steckverbindung am Datengerät unverlierbar am Speichergerät befestigt ist.

12. Speichergerät nach einem der vorhergehenden Ansprüche,
**dadurch gekennzeichnet, dass**
- das Speichergerät wenigstens eine, vorzugsweise weiße, Leuchtdiode (16) als Lichtquelle umfasst und das Eingabeelement, insbesondere der Wählschalter, eine Funktionsstellung zur Benutzung als Lampe bietet, und/oder
- der Stromspeicher (2) ein fest eingebauter Speicher in Form eines Kondensators kombiniert mit einem Aufnahmeschacht (9) für eine einzige Batterie (10) mit einer Spannung von mindestens 5 V und geringen Abmessungen, insbesondere eine Fotobatterie mit einem Durchmesser von maximal einem Zentimeter und einer Länge von maximal drei Zentimetern, ist.

13. Speichergerät nach einem der vorhergehenden Ansprüche,
**dadurch gekennzeichnet, dass**
die Öffnungsklinke (14a) des Karabiners (14) als Wählschalter für den Betriebsmodus dient.

14. Speichergerät nach einem der vorhergehenden Ansprüche,
**dadurch gekennzeichnet, dass**
vom gleichen Ende des Speichergerätes wenigstens zwei Stecker (4a, b) im Winkel, insbesondere einem spitzen Winkel, maximal jedoch einem Winkel von 120°, voneinander abstehen.

15. Speichergerät nach einem der vorhergehenden Ansprüche,
**dadurch gekennzeichnet, dass**
das Speichergerät an einem Ende einen Karabiner (14), insbesondere zur induktiven Aufladung des Stromspeichers (2) mit im geschlossen Zustand einer elektrischen Wicklung um die innere Öse des Karabiners (14) herum aufweist, und am anderen Ende wenigsten einen, insbesondere zwei verschiedene USB-Stecker (4a, b).
